# EUROPÄISCHE PATENTANMELDUNG

(11) **EP 4 406 810 A1**
(43) Veröffentlichungstag der Anmeldung: **31.07.2024**
(21) Anmeldenummer: 23214569.8
(22) Anmeldetag: 06.12.2023
(51) Int. Cl.: B61L 15/00, B61L 27/16, B61L 27/57, G06F 8/60

(54) **STEUERUNG EINES FUNKTIONSUMFANGS MEHRERER FAHRZEUGE**

(30) Priorität: 27.01.2023 DE 102023200661
(71) Anmelder: Siemens Mobility GmbH, 81739 München (DE)
(72) Erfinder: Rössler, Wolfgang, 90429 Nürnberg (DE); Stutzbach, Michael, 91083 Baiersdorf (DE); Winetzhammer-Mazurek, Sabine, 90763 Fürth (DE)
(74) Vertreter: Siemens Patent Attorneys

(57) **Zusammenfassung**

Die Erfindung betrifft ein Verfahren (100), bei welchem verschiedenen Fahrzeugen (10) jeweils eine Mehrzahl an Steuerfunktionen bereitgestellt wird (102). Für die genannten Fahrzeuge (10) wird des Weiteren jeweils zumindest ein Teil der bereitgestellten (102) Steuerfunktionen zum Zwecke eines Betriebs des Fahrzeugs (10) aktiviert (104). Daraufhin wird eine Menge an zum Zwecke eines Betriebs jedes der genannten Fahrzeuge (10) aktiven Steuerfunktionen auf Basis von Informationen aus einer gemeinsamen Datenbank (12) gesteuert (106) .

## Beschreibung

Die Erfindung betrifft ein Verfahren zur Steuerung einer Menge an aktiven Steuerfunktionen, ein System zur Durchführung des Verfahrens, ein Computerprogramm sowie ein computerlesbares Medium.

Um einer großen Vielfalt an Kundenwünschen gerecht zu werden und dennoch kostengünstig und effizient herstellen zu können, ist es bereits bekannt, Fahrzeuge ab Werk umfangreich mit Hardware sowie Software auszurüsten. Hierzu wird beispielsweise standardmäßig Hardware vorgesehen, welche dazu eingerichtet ist, zumindest durch einfache Nachrüstung oder gar völlig unabhängig von einer Nachrüstung eine beliebige Anzahl an bereitgestellten Funktionen auszuführen. Wünscht ein Kunde lediglich einen eingeschränkten Umfang an Steuerungsfunktionen, so werden diese mittels einer Software beschränkt. Damit weist das Fahrzeug zwar hardwareseitig einen breiteren Umfang an Möglichkeiten zum Zwecke dessen Steuerung auf, diese werden jedoch erst auf Wunsch des Kunden aktiviert. Auf diese Weise kann ein Kunde sein Fahrzeug gemäß seinen individuellen Bedürfnissen einfach vor einem Kauf konfigurieren. Häufig kommt es jedoch dazu, dass ein Kunde oder dessen Rechtsnachfolger nach dem Erwerb des Fahrzeugs einen Funktionsumfang seines Fahrzeugs erweitern oder möglicherweise auch beschränken möchte. Ferner können sich die Interessen des Kunden aufgrund äußerer Umstände, wie beispielsweise einer Pandemiesituation oder eines Fortschritts der Technik dahingehend ändern, dass weitere Steuerungsfunktionen gewünscht sind, um einen Umfang an zur Verfügung stehender Steuerfunktionen zu erweitern. Zu diesem Zweck ist es bislang üblich, dass mittels des Herstellers eine entsprechend den Kundenwünschen angepasste Steuerungssoftware bereitgestellt wird. Der Kunde kann sodann seine Fahrzeuge anhand dieser angepassten Steuerungssofte betreiben. Dies geht jedoch mit einem hohen Arbeitsaufwand sowie Ausfallzeiten von Fahrzeugen einher. Zudem ist bislang eine umfangreiche Mitwirkung des Herstellers erforderlich.

Aufgabe der Erfindung ist es, ein verbessertes Verfahren zum Zwecke einer Anpassung eines Umfangs an Steuerfunktionen bereitzustellen.

Diese Aufgabe wird gelöst durch ein Verfahren gemäß den Merkmalen des Anspruchs 1.

Des Weiteren liegt der Erfindung die Aufgabe zugrunde, ein System zur Durchführung des Verfahrens anzugeben.

Diese Aufgabe wird gelöst mit einem System gemäß den Merkmalen des nebengeordneten Systemanspruchs.

Zudem liegen der Erfindung die Aufgaben zugrunde, ein Computerprogramm sowie ein computerlesbares Medium bereitzustellen.

Diese Aufgaben werden gelöst durch ein Computerprogramm gemäß den Merkmalen des nebengeordneten Computerprogrammanspruchs sowie einem computerlesbaren Medium gemäß den Merkmalen des nebengeordneten Anspruchs 15.

Vorteilhafte Weiterbildungen sind Gegenstand jeweils abhängiger Unteransprüche.

Bei dem erfindungsgemäßen Verfahren wird mehreren Fahrzeugen jeweils eine Mehrzahl an Steuerfunktion bereitgestellt. Für die genannten Fahrzeuge wird zumindest ein Teil der bereitgestellten Steuerfunktion zum Zwecke eines Betriebs des jeweiligen Fahrzeugs aktiviert. Des Weiteren wird eine Menge an zum Zwecke eines Betriebs jedes der genannten Fahrzeuge aktiven Steuerfunktionen auf Basis von Informationen aus einer gemeinsamen Datenbank gesteuert.

Unter der genannten Datenbank soll im vorliegenden Zusammenhang ein Datenbanksystem verstanden werden, welches dazu eingerichtet ist, auf elektronische Weise Daten zu verwalten. Beispielsweise ist das Datenbanksystem als ein zentrales, repliziertes Datenbanksystem ausgebildet. Alternativ ist das Datenbanksystem beispielhaft als ein verteiltes, repliziertes Datenbanksystem, als ein verteiltes, repliziertes Dateisystem, als ein virtueller gemeinsamer Speicher, welcher in der Informationstechnologie auch als "Virtual Shared Memory" (VSM) bezeichnet wird oder als ein verteilter gemeinsamer Speicher, welcher in der Informationstechnologie als "Distributed Shared Memory" (DSM) bezeichnet wird, ausgebildet.

Dies ermöglicht eine aufwandsgünstige zentrale Anpassung eines Umfangs der Steuerfunktion. Des Weiteren wird so eine bedarfsgerechte Anpassung des Funktionsumfangs eines Fahrzeugs zum Zwecke dessen Steuerung auf einfache Weise ermöglicht. Beispielhaft kann ein Umfang an Fahrzeugfunktionen mittels einer Vergabe von Lizenzschlüsseln erweitert werden. Besonders vorteilhaft kann diese Anpassung daher durch einen Endkunden selbstständig erfolgen. Ein Werkstattaufenthalt, damit einhergehende Wartezeiten sowie Ausfallzeiten des Fahrzeugs können so einfach vermieden werden. Zudem kann ein Umfang einer erforderlichen Mitwirkung des Herstellers einfach reduziert werden. Insbesondere kann eine Anpassung der Steuerungssoftware ohne Entwicklungstätigkeiten durch den Hersteller erfolgen.

Eine vorteilhafte Weiterbildung sieht vor, dass zum Zwecke einer Steuerung der Menge an aktiven Steuerfunktionen auf Basis von Informationen aus der gemeinsamen Datenbank die den genannten Fahrzeugen bereitgestellten Steuerfunktionen aktiviert und/oder deaktiviert werden. Dies ermöglicht es, eine Menge an aktiven Steuerfunktionen unabhängig von einer räumlichen Verfügbarkeit des Fahrzeugs zu steuern. Zudem können so Steuerfunktionen ohne unmittelbaren Zugriff auf das Fahrzeug aktiviert und/oder deaktiviert werden.

Des Weiteren sieht eine vorteilhafte Weiterbildung vor, dass auf Basis von Informationen aus der gemeinsamen Datenbank eine Menge an den den Fahrzeugen bereitgestellten Steuerfunktionen erweitert oder verringert wird. Ein technischer Fortschritt oder unvorhergesehene Situationen, wie beispielsweise eine Pandemiesituation erfordern eine Erweiterung eines Funktionsumfangs über die zum Zeitpunkt einer Herstellung bereitgestellten Steuerfunktionen hinaus. Daher kann auf die vorgenannte Weise schnell und zuverlässig eine Menge an bereitgestellten Steuerfunktionen angepasst werden. Beispielhaft kann eine Steuerung einer raumlufttechnischen Anlage rasch an Vorgaben aus Infektionsschutzvorschriften angepasst werden. Zudem ermöglicht dies, dass Steuerfunktionen einfach an einen Stand der Technik angepasst werden können. Damit kann eine Effizienz einer Fahrzeugsteuerung kostengünstig und mit geringem Aufwand gesteigert werden.

Ferner sieht eine vorteilhafte Weiterbildung vor, dass auf Basis der Informationen aus der gemeinsamen Datenbank eine Menge an aktiven Steuerfunktionen betreffend Fahrzeuge einer vorbestimmten Gruppe der mehreren Fahrzeuge gesteuert wird. Dies ermöglicht es, ein besonders zeiteffizientes Verfahren bereitzustellen. Ein Funktionsumfang von Fahrzeugen, welche einer vorbestimmten Gruppe zugeordnet sind, kann so für alle der Gruppe zugehörigen Fahrzeuge einheitlich und gemeinsam gesteuert werden kann. Damit kann auf einfache Weise darauf verzichtet werden, für jedes einzelne Fahrzeug der Gruppe eine Menge an aktiven Steuerfunktionen zu steuern. Stattdessen kann der Umfang an zu aktivierenden oder zu deaktivierenden Steuerfunktionen für eine Fahrzeugflotte zusammengefasst gesteuert werden.

In einer anderen vorteilhaften Weiterbildung ist vorgesehen, dass auf Basis von Informationen aus der gemeinsamen Datenbank die Menge an aktiven Steuerfunktionen betreffend ein individuelles Fahrzeug gesteuert wird. So kann eine flexible Anpassung an individuelle Fahrzeugtypen oder Einsatzbedingungen eines vorbestimmten Fahrzeugs ermöglicht werden.

Zudem wird eine Weiterbildung vorgeschlagen, bei welcher eine Menge an aktiven Steuerfunktionen auf Basis einer räumlichen Beschränkung gesteuert wird. Alternativ oder zusätzlich wird vorgeschlagen, dass die Menge an aktiven Steuerfunktionen auf Basis einer zeitlichen Beschränkung gesteuert wird. Dies ermöglicht es, eine kostengünstige Erweiterung an Steuerfunktionen bereitzustellen. Beispielsweise kann mittels der räumlichen Beschränkung territoriale Besonderheiten berücksichtigt werden. Mittels einer zeitlichen Beschränkung kann eine temporäre Erweiterung von Steuerfunktionen oder Tests von Steuerfunktionen bereitgestellt werden.

Darüber hinaus wird eine Weiterbildung vorgeschlagen, bei welcher die Menge an aktiven Steuerfunktionen mittels einer zentralen Verwaltungsinstanz gesteuert wird. Im vorliegenden Zusammenhang werden mittels der zentralen Verwaltungsinstanz Anweisungen zum Zwecke einer Anpassung einer Menge an aktiven Steuerfunktionen auf Basis von Informationen aus der gemeinsamen Datenbank an die mehreren Fahrzeuge übertragen. Die zentrale Verwaltungsinstanz ist daher als eine Schnittstelle zwischen der gemeinsamen Datenbank und den mehreren Fahrzeugen zu verstehen. Dies ermöglicht es, das Verfahren aufwandsgünstig und kostengünstig zu realisieren.

In einer vorteilhaften Ausführungsvariante wird als zentrale Verwaltungsinstanz eine stationäre Datenverarbeitungsvorrichtung vorgesehen. Bei der Datenverarbeitungsvorrichtung kann es sich beispielsweise um einen Computer, einen Mikrocontroller, einen Prozessor oder eine andere programmierbare Hardwarekomponente handeln. Ferner ist es denkbar, dass es sich bei der Datenverarbeitungsvorrichtung um eine virtualisierte Hardwareressource einer Rechnerwolke oder um eine Laufzeitumgebung mit veränderbaren Rechen- und/oder Speicherkapazitäten handelt. Die genannte Laufzeitumgebung soll im Sinne der Informatik verstanden werden. Insbesondere ist die Datenverarbeitungsvorrichtung dazu eingerichtet, Daten einzulesen, zu schreiben, zu übertragen und/oder zu verwalten. Auf diese Weise kann ein besonders betriebssicheres Verfahren bereitgestellt werden.

In einer weiteren vorteilhaften Ausführungsvariante wird vorgesehen, dass zum Zwecke einer Steuerung einer Menge an aktiven Steuerungsfunktionen eine drahtlose Kommunikation zum Zwecke einer Datenübertragung zwischen der zentralen Verwaltungsinstanz und den genannten Fahrzeugen vorgesehen wird. Dies ermöglicht es, Steuerfunktionen mittels eines Remoteverfahrens zu aktivieren oder zu deaktivieren. So kann ein Umfang der Steuerfunktionen auf Distanz angepasst werden. Ein Werkstattaufenthalt oder eine Unterbrechung einer Betriebsbereitschaft oder eines Betriebs des Fahrzeugs kann so weitestgehend vermieden werden. Beispielsweise ermöglicht dies, dass Fahrzeuge während eines Aufenthalts in einem Depot auf Distanz konfiguriert werden. Zudem kann so eine Erweiterung oder Einschränkung des Funktionsumfangs während eines Betriebs des Fahrzeugs erfolgen.

Mittels des erfindungsgemäßen Systems ist das erfindungsgemäße Verfahren durchführbar.

Das erfindungsgemäße System weist mehrere Fahrzeuge auf. Des Weiteren weist das erfindungsgemäße System eine gemeinsame Datenbank auf. Bei der gemeinsamen Datenbank handelt es sich insbesondere um die bereits zuvor im Zusammenhang mit dem Verfahren beschriebene Datenbank. Zudem weist das erfindungsgemäße System eine Datenverarbeitungsvorrichtung auf. Bei dieser Datenverarbeitungsvorrichtung handelt es sich im vorliegenden Zusammenhang insbesondere um die bereits zuvor beschriebene Datenverarbeitungsvorrichtung. Die genannte Datenverarbeitungsvorrichtung ist dazu eingerichtet, eine Menge an aktiven Steuerfunktionen der genannten Fahrzeuge auf Basis von in der Datenbank gespeicherten Informationen gemäß des erfindungsgemäßen Verfahrens zu steuern. Dies ermöglicht es einem Inhaber des Systems, aufwandsgünstig einen Funktionsumfang der Fahrzeuge zu steuern. Ferner kann auf diese Weise nach einem Zukauf von Steuerungsfunktionen bei dem Hersteller unabhängig von diesem oder unabhängig von einer Fachwerkstatt ein Funktionsumfang der Fahrzeuge des Systems angepasst werden.

In einer vorteilhaften Weiterbildung des Systems ist vorgesehen, dass die mehreren Fahrzeuge jeweils als ein schienengebundenes Fahrzeug ausgebildet sind. Auf diese Weise kann ein Funktionsumfang aller einer vorbestimmten Gruppe zugeordneten Fahrzeugen unabhängig von einem Aufenthaltsort der Fahrzeuge erfolgen. Darüber hinaus kann so sowohl gruppenweise als auch individuell der Funktionsumfang von schienengebundenen Fahrzeugen zuverlässig und einfach gesteuert werden.

Eine weitere vorteilhafte Weiterbildung des Systems sieht vor, dass die Datenverarbeitungsvorrichtung sowie die Datenbank Teil einer zentralen Verwaltungsinstanz sind. Bei der genannten Verwaltungsinstanz handelt es sich insbesondere um die bereits im Zusammenhang mit dem Verfahren beschriebene Verwaltungsinstanz.

In einer vorteilhaften Ausführungsvariante des Systems ist die zentrale Verwaltungsinstanz mit den mehreren Fahrzeugen zum Zwecke einer Steuerung einer Menge an aktiven Steuerfunktionen mittels einer drahtlosen Kommunikationsverbindung verbunden. Insbesondere ist die zentrale Verwaltungsinstanz mit den mehreren Fahrzeugen zum Zwecke der Steuerung einer Menge an aktiven Steuerfunktionen mittels eines Mobilfunknetzes verbunden. Dies ermöglicht es, den Funktionsumfang von Fahrzeugen unabhängig von einem Standort eines Fahrzeugs zuverlässig zu steuern. Die Menge an aktiven Steuerfunktionen kann so auf einfache Weise ferngesteuert mittels eines Remoteverfahrens realisiert werden.

Des Weiteren sieht die Erfindung ein Computerprogramm vor, welches bei dessen Ausführung die Datenverarbeitungsvorrichtung des erfindungsgemäßen Systems dazu veranlasst, das erfindungsgemäße Verfahren durchzuführen.

Ferner sieht die Erfindung ein computerlesbares Medium vor. Dieses weist Instruktionen auf, welche die Datenverarbeitungsvorrichtung des erfindungsgemäßen Systems dazu veranlasst, das erfindungsgemäße Verfahren durchzuführen. Bei dem computerlesbaren Medium kann es sich beispielsweise um eine CD-ROM, eine DVD, einen USB- oder Flash-Speicher oder um ein nicht körperliches Medium, wie ein Datenstrom und/oder ein Datenträgersignal handeln.

Die voranstehend beschriebenen Eigenschaften, Merkmale und Vorteile der Erfindung sowie die Art und Weise, wie diese erreicht werden, werden im Zusammenhang mit den Figuren in der folgenden Beschreibung der Ausführungen der Erfindung näher erläutert. Soweit zweckdienlich, werden in den Figuren dieselben Bezugszeichen für dieselben oder einander entsprechende Elemente der Erfindung verwendet. Das folgende Ausführungsbeispiel sowie beschriebene Variationen davon dienen der Erläuterung der Erfindung und beschränken die Erfindung nicht auf die darin angegebenen Kombinationen von Merkmalen, auch nicht in Bezug auf funktionale Merkmale. Zudem können alle in dem Ausführungsbeispiel angegebenen Merkmale isoliert betrachtet und in geeigneter Weise mit den Merkmalen eines beliebigen Anspruchs kombiniert werden.

Es zeigen:
- FIG 1: eine schematische Illustration eines Beispiels des erfindungsgemäßen Verfahrens;
- FIG 2: ein Ausführungsbeispiel eines erfindungsgemäßen Systems zur Durchführung des in FIG 1 illustrierten Beispiels des Verfahrens in einer schematischen Darstellung.

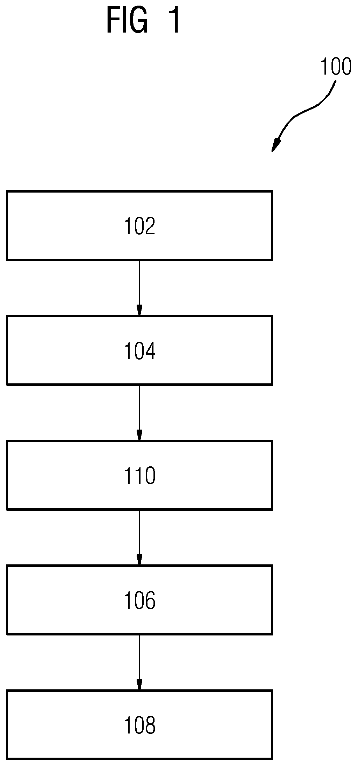

FIG 1 illustriert ein Beispiel eines Verfahrens 100, bei welchem eine Menge an aktiven Steuerfunktionen mehrerer Fahrzeuge 10 auf Basis von Informationen aus einer gemeinsamen Datenbank 12 gesteuert wird 106.

Üblicherweise werden Fahrzeuge 10 zum Zwecke einer wirtschaftlichen Produktion ab Werk bereits mit umfassender Hardware ausgerüstet. Auf diese Weise können Fahrzeugfunktionen nach Herstellung des Fahrzeugs 10 einfach und kostengünstig an individuelle Wünsche eines zukünftigen Käufers angepasst werden. Zudem können so hohe Kosten im Falle einer Nachrüstung vermieden werden. Des Weiteren wird den Fahrzeugen 10 ab Werk mittels einer Steuerungssoftware bereits eine Mehrzahl an Steuerfunktionen bereitgestellt 102. Ein bereits hergestelltes Fahrzeug 10 kann daher leicht an Bedürfnisse des Endkunden angepasst werden, indem aus einer Menge an von ab Werk bereitgestellten 102 Steuerfunktionen vorbestimmte Steuerfunktionen herstellerseitig aktiviert werden 104.

Erwirbt ein Endkunde mehrere Fahrzeuge 10, so kann er eine Aktivierung an bereitgestellten Steuerfunktionen 102 für einzelne Fahrzeuge 10 individuell oder für Gruppen der mehreren Fahrzeuge 10 gemeinsam durch den Hersteller aktivieren lassen 104.

Mittels des vorliegend im Zusammenhang mit FIG 1 beschriebenen Beispiels des Verfahrens 100 wird nach einer herstellerseitigen Konfiguration der Fahrzeuge 10 eine Menge an zum Zwecke eines Betriebs jedes der genannten Fahrzeuge 10 aktiven Steuerfunktionen auf Basis von Informationen aus einer gemeinsamen Datenbank 12 gesteuert 106.

In der gemeinsamen Datenbank 12 sind beispielhaft Informationen betreffend eine Art und einen Typ von ab Werk bereitgestellten 102 Steuerfunktionen hinterlegt. Des Weiteren weist die gemeinsame Datenbank 12 Informationen betreffend eine Menge an aktiven Steuerfunktionen für ein jedes der mehreren Fahrzeuge 10 auf. Mittels einer Änderung von Einträgen in der gemeinsamen Datenbank 12 wird vorliegend eine Menge an aktiven Steuerfunktionen der Fahrzeuge 10 gesteuert 106.

Erwirbt der vorgenannte Endkunde beispielhaft einen Lizenzschlüssel, so kann dieser auf Basis des Lizenzschlüssels vorbestimmte Einträge in der Datenbank 12 ändern. Mittels einer Manipulation der Informationen der gemeinsamen Datenbank 12 kann so die Menge an Steuerfunktionen aus einer Menge der den Fahrzeugen 10 ab Werk bereitgestellten 102 Steuerfunktionen aktiviert und/oder deaktiviert werden 108.

Darüber hinaus bietet die gemeinsame Datenbank 12 im vorliegend beschriebenen Beispiel des Verfahrens 100 die Möglichkeit, eine Menge an den einem Fahrzeugs 10 ab Werk bereitgestellten 102 Steuerfunktionen zu erweitern oder zu verringern 110. Beispielsweise kann der Endkunde mittels eines Lizenzschlüssels dazu berechtigt werden, vorbestimmte Einträge in der gemeinsamen Datenbank 12 zu ergänzen oder zu löschen. Ferner kann in der gemeinsamen Datenbank 12 ein zum Zwecke einer Erweiterung 110 der Steuerfunktionen erforderlicher Programmcode hinterlegt werden, welcher sodann auf die Fahrzeuge 10 verteilt wird. Auf diese Weise kann der Endkunde selbständig ein Upgrade oder ein Update der Menge an ab Werk bereitgestellten 102 Steuerfunktionen durchführen.

Des Weiteren sieht das in FIG 1 beispielhaft illustrierte Verfahren 100 vor, dass mittels einer Manipulation von Einträgen der gemeinsamen Datenbank 12 eine Menge an aktiven Steuerfunktionen betreffend alle Fahrzeuge 10 einer vorbestimmten Gruppe der mehreren Fahrzeuge 10 und/oder betreffend ein individuelles Fahrzeug 10 der mehreren Fahrzeuge 10 gesteuert wird 106.

In einer besonderen Ausführungsvariante des beschriebenen Beispiels des Verfahrens 100 wird die Menge an aktiven Steuerfunktionen des individuellen Fahrzeugs 10 und/oder der genannten Gruppe an Fahrzeugen 10 nach Vorgabe einer räumlichen Beschränkung gesteuert 106. Auf diese Weise kann erreicht werden, dass vorbestimmte Steuerfunktionen nur innerhalb eines vorab begrenzten territorialen Bereichs ihre Funktion behalten. Überschreitet ein entsprechendes Fahrzeug 10 eine vorgebbare räumliche Beschränkung, so werden vorbestimmte Steuerfunktionen deaktiviert und/oder alternative Steuerfunktionen aktiviert 108.

Des Weiteren sieht das im Zusammenhang mit FIG 1 beschriebene Beispiel des Verfahrens 100 vor, dass die Menge an aktiven Steuerfunktionen auf Basis einer zeitlichen Beschränkung gesteuert wird 106. Dem Endkunden ermöglicht dies eine kosteneffiziente Steuerung 106 der Menge an aktiven Steuerfunktionen. Ferner ermöglicht dies dem Endkunden, Steuerfunktionen zu testen und Auswirkungen auf einen Betrieb der Fahrzeuge 10 zu bestimmen. So kann der Endkunde beispielhaft einen zeitlich beschränkten Lizenzschlüssel erwerben. Mittels dieses zeitlich beschränkten Lizenzschlüssels wird dann die Menge an Steuerfunktionen eines individuellen Fahrzeugs 10 oder der genannten Gruppe an Fahrzeugen 10 temporär aktiviert 108. Nach Ablauf einer vorgegebenen Zeitspanne ist es denkbar, dass eine gewählte Steuerfunktion nicht weiter zur Verfügung steht und deaktiviert wird 108.

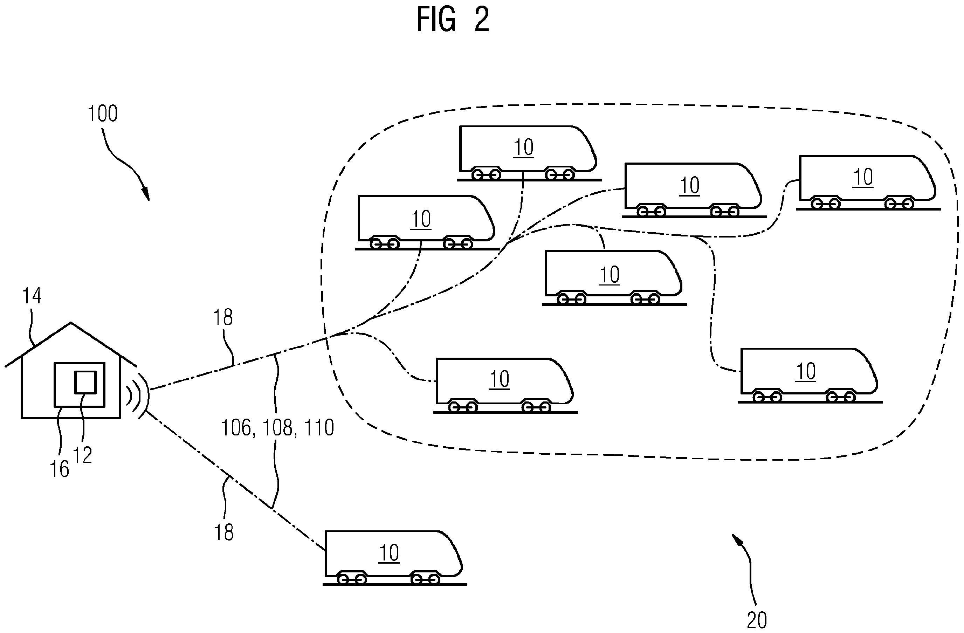

FIG 2 zeigt ein Ausführungsbeispiel eines Systems 20, welches mehrere Fahrzeuge 10 sowie eine gemeinsame Datenbank 12 aufweist. Bei den mehreren Fahrzeugen 10 handelt es sich insbesondere um die bereits im Zusammenhang mit FIG 1 beschriebenen mehreren Fahrzeuge 10. Des Weiteren handelt es sich bei der gemeinsamen Datenbank 12 um die bereits im Zusammenhang mit FIG 1 beschriebene Datenbank 12. Zudem weist das System 20 eine Datenverarbeitungsvorrichtung 16 auf. Diese ist dazu eingerichtet, eine Menge an aktiven Steuerfunktionen der mehreren Fahrzeuge 10 auf Basis von in der Datenbank 12 gespeicherten Informationen zu steuern 106. Zweckmäßigerweise weist die Datenverarbeitungsvorrichtung 16 die gemeinsame Datenbank 12 auf. FIG 2 illustriert des Weiteren ein besonderes Ausführungsbeispiel des in FIG 1 beschriebenen Beispiels des Verfahrens 100. Dabei ist mittels des in FIG 2 gezeigten Ausführungsbeispiels des Systems 20 das im Zusammenhang mit FIG 1 beschriebene Beispiel des Verfahrens 100 durchführbar.

Beispielhaft sind die in FIG 2 gezeigten Fahrzeuge 10 jeweils als schienengebundene Fahrzeuge 10 ausgebildet. Ferner weist das System 20 eine zentrale Verwaltungsinstanz 14 auf. Im vorliegenden Ausführungsbeispiel des Systems 20 sind die Datenverarbeitungsvorrichtung 16 sowie die zuvor genannte gemeinsame Datenbank 12 Teil der genannten zentralen Verwaltungsinstanz 14. Diese zentrale Verwaltungsinstanz 14 hat im vorliegenden Ausführungsbeispiel die Aufgabe, als Schnittstelle einen Datenaustausch zwischen der gemeinsamen Datenbank 12 und den mehreren Fahrzeugen 10 zu realisieren. Beispielhaft handelt es sich bei der zentralen Verwaltungsinstanz 14 um eine Landseite. Dabei ist die zentrale Verwaltungsinstanz 14 vorliegend dazu eingerichtet, Anweisungen zum Zwecke einer Anpassung einer Menge an aktiven Steuerfunktionen auf Basis von Informationen aus der gemeinsamen Datenbank 12 an die mehreren Fahrzeuge 10 zu übertragen.

Zum Zwecke des Datenaustausches und damit zum Zwecke einer Steuerung 106 der Menge an aktiven Steuerfunktionen der Fahrzeuge 10 ist die zentrale Verwaltungsinstanz 14 mit den mehreren schienengebundenen Fahrzeugen 10 beispielhaft mittels eines Mobilfunknetzes 18 verbunden. Alternativ oder zusätzlich ist denkbar, dass die zentrale Verwaltungsinstanz 14 mit den mehreren schienengebundenen Fahrzeugen 10 mittels lokalen Drahtlosnetzwerken an Bahnhöfen oder anderweitigen Haltestellen verbunden wird. Auf diese Weise wird eine aufwandsgünstige und zuverlässige Steuerung 106 der genannten Menge an aktiven Steuerfunktionen ermöglicht. Eine Aktivierung 108, eine Deaktivierung 108, eine Erweiterung 110 und/oder Verringerung 110 von Steuerfunktionen wird so einfach mittels eines Remoteverfahrens realisiert.

Obwohl die Erfindung im Detail durch die bevorzugten Ausführungen näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen. Unabhängig vom grammatikalischen Geschlecht eines bestimmten Begriffs sind Personen mit männlicher, weiblicher oder anderer Geschlechteridentität mit umfasst.

## Patentansprüche

1. Verfahren (100), bei welchem
- verschiedenen Fahrzeugen (10) jeweils eine Mehrzahl an Steuerfunktionen bereitgestellt wird (102);
- für die genannten Fahrzeuge (10) jeweils zumindest ein Teil der bereitgestellten (102) Steuerfunktionen zum Zwecke eines Betriebs des Fahrzeugs (10) aktiviert wird (104);
- eine Menge an zum Zwecke eines Betriebs jedes der genannten Fahrzeuge (10) aktiven Steuerfunktionen auf Basis von Informationen aus einer gemeinsamen Datenbank (12) gesteuert wird (106) .

2. Verfahren (100) nach Anspruch 1,
bei welchem zum Zwecke einer Steuerung (106) einer Menge an aktiven Steuerfunktionen auf Basis von Informationen aus der gemeinsamen Datenbank (12) die den genannten Fahrzeugen (10) bereitgestellten Steuerfunktionen aktiviert und/oder deaktiviert werden (108).

3. Verfahren (100) nach Anspruch 1 oder 2,
bei welchem auf Basis von Informationen aus der gemeinsamen Datenbank (12) eine Menge an den den Fahrzeugen (10) bereitgestellten (102) Steuerfunktionen erweitert oder verringert wird (110).

4. Verfahren (100) nach einem der vorhergehenden Ansprüche,
bei welchem auf Basis von Informationen aus der gemeinsamen Datenbank (12) eine Menge an aktiven Steuerfunktionen betreffend Fahrzeuge (10) einer vorbestimmten Gruppe aus den vorgenannten Fahrzeugen (10) gesteuert wird (106).

5. Verfahren (100) nach einem der vorhergehenden Ansprüche,
bei welchem auf Basis von Informationen aus der gemeinsamen Datenbank (12) eine Menge an aktiven Steuerfunktionen betreffend ein individuelles Fahrzeug der vorgenannten Fahrzeuge (10) gesteuert wird (106).

6. Verfahren (100) nach einem der vorhergehenden Ansprüche,
bei welchem eine Menge an aktiven Steuerfunktionen auf Basis einer räumlichen und/oder zeitlichen Beschränkung gesteuert wird (106).

7. Verfahren (100) nach einem der vorhergehenden Ansprüche,
bei welchem eine Menge an aktiven Steuerfunktionen mittels einer zentralen Verwaltungsinstanz (14) gesteuert wird (106).

8. Verfahren (100) nach Anspruch 7,
bei welchem als zentrale Verwaltungsinstanz (14) eine stationäre Datenverarbeitungsvorrichtung (16) vorgesehen wird.

9. Verfahren (100) nach Anspruch 7 oder 8,
bei welchem zum Zwecke einer Steuerung (106) einer Menge an aktiven Steuerfunktionen eine drahtlose Kommunikationsverbindung (18) zwischen der zentralen Verwaltungsinstanz (14) und den genannten Fahrzeugen (10) zum Zwecke einer Datenübertragung vorgesehen wird.

10. System (20) aufweisend
- mehrere Fahrzeuge (10);
- eine gemeinsame Datenbank (12);
- eine Datenverarbeitungsvorrichtung (16), welche dazu eingerichtet ist, eine Menge an aktiven Steuerfunktionen der genannten Fahrzeuge (10) auf Basis von in der gemeinsamen Datenbank (12) gespeicherten Informationen gemäß dem Verfahren (100) nach einem der Ansprüche 1 bis 9 zu steuern (106).

11. System (20) nach Anspruch 10,
**dadurch gekennzeichnet, dass**
die mehreren Fahrzeuge (10) als schienengebundene Fahrzeuge ausgebildet sind.

12. System (20) nach einem der Ansprüche 10 oder 11,
**dadurch gekennzeichnet, dass**
die Datenverarbeitungsvorrichtung (16) sowie die gemeinsame Datenbank (12) Teil einer zentralen Verwaltungsinstanz (14) sind.

13. System (20) nach Anspruch 12,
**dadurch gekennzeichnet, dass**
die zentrale Verwaltungsinstanz (14) mit den mehreren Fahrzeugen (10) zum Zwecke einer Steuerung (106) einer Menge an aktiven Steuerfunktionen mittels einer drahtlosen Kommunikationsverbindung (18), insbesondere mittels eines Mobilfunknetzes, verbunden ist.

14. Computerprogramm, welches bei dessen Ausführung die Datenverarbeitungsvorrichtung (16) des Systems (20) nach einem der Ansprüche 10 bis 13 dazu veranlasst, das Verfahren (100) nach einem der Ansprüche 1 bis 9 durchzuführen.

15. Computerlesbares Medium aufweisend Instruktionen, welche die Datenverarbeitungsvorrichtung (16) des Systems (20) nach einem der Ansprüche 10 bis 13 dazu veranlasst, das Verfahren (100) nach einem der Ansprüche 1 bis 9 durchzuführen.
